# EUROPEAN PATENT SPECIFICATION

(11) **EP 2 913 666 B1**
(45) Date of publication and mention of the grant of the patent: **27.03.2019**
(21) Application number: 15156489.5
(22) Date of filing: 25.02.2015
(51) Int. Cl.: G01N 21/956

(54) **Method for inspecting honeycomb structure**
Verfahren zur Untersuchung einer Wabenstruktur
Procédé d'inspection de structure en nid d'abeilles

(30) Priority: 26.02.2014 JP 2014035841
(43) Date of publication of application: 02.09.2015
(73) Proprietor: NGK Insulators, Ltd., Nagoya-city, Aichi 467-8530 (JP)
(72) Inventor: Uesaka, Yosuke, Nagoya city, Aichi 467-8530 (JP)
(74) Representative: Mewburn Ellis LLP

(56) References cited:
- WO-A1-2013/008790
- DE-A1-102007 000 477
- JP-A- 2002 257 736
- US-A1- 2008 157 441
- US-A1- 2011 116 704

## Description

### BACKGROUND OF THE INVENTION

### Field of the Invention

The present invention relates to a method for inspecting honeycomb structure. More specifically, the present invention relates to a method for inspecting honeycomb structure that allows simply inspecting a deformation state of cells open to an end face of a honeycomb structure.

In various fields such as chemistry, electric power, and iron and steel, there is employed a ceramic honeycomb structure excellent in thermal resistance and corrosion resistance as a carrier for a catalyst device or as a filter for an environmental measure, collection of a specific substance, or a similar purpose. The honeycomb structure is a tubular construction that has a partition wall. The partition wall defines a plurality of cells extending from a first end face, which is one of an end face, to a second end face, which is the other end face.

Such ceramic honeycomb structure may generate various defects during the manufacturing process. Conventionally, a method for inspecting the defect of the honeycomb structure is mainly a visual inspection by a person, an inspection of a size of a cell with pin gage, an inspection for clogging using light, or a similar method. As a method for detecting a defect occurred in the honeycomb structure, there has been proposed a method (method for inspecting an end face) for detecting a defect of an end face by taking an image of an end face of a honeycomb structure with camera (for example, see Patent Document 1).

As one defect generated at the ceramic honeycomb structure, there is a defect of distorting a partition wall of the honeycomb structure. When the partition wall of the honeycomb structure is distorted, a cell open to the end face of the honeycomb structure is deformed. Such defect of deforming the cell may be hereinafter referred to as a "cell deformation" or a "cell deformation defect." Recently, a request on including an inspection for presence/absence of cell deformation defect in a quality inspection for the honeycomb structure has been increased.

[Patent Document 1] JP-A-2002-257736
<Insert page 2a>

US 2011/116704 describes a high-resolution, large-field scanning inspection system for inspecting extruded ceramic honeycomb structures. The system allows for inspecting cells at an endface of a cellular ceramic substrate by capturing, along an optical axis, line images of illuminated cells as a line illumination scans over at least a portion of the plurality of cells. The inspection method includes centering the line illumination on the optical axis to make the line illumination normally incident upon the endface. The inspection method also includes forming from the line images a composite image of the cells, and determining from the composite image at least one parameter of at least one cell.

### SUMMARY OF THE INVENTION

When a person inspects a cell deformation defect by visual inspection, there is a problem of inspection at low accuracy. A considerably large number of cells are open to end faces of a honeycomb structure, and a size of these cells is considerably small. Accordingly, the visual inspection by a person also causes a problem of requiring considerably long inspection time. When inspecting the cell deformation defect with pin gage, this also causes a problem that the pin gage is in contact with a partition wall during the inspection, resulting in a damage of the partition wall.

The cell deformation defect is possibly inspected by image processing. However, as described above, a considerably large number of cells are open to the end face of the honeycomb structure. Accordingly, inspecting the all cells for cell deformation defect causes a problem of requiring considerably long inspection time. For example, if the inspection for cell deformation defect is attempted to be incorporated in the manufacturing process, this inspection for cell deformation defect may be a rate-determining process. The inspection for cell deformation defect is desirable to be performed on all cells of all manufactured honeycomb structures and substantially all cells at the end face of the one honeycomb structure. In view of this, an inspection method that can simply inspect the cell deformation defect, rather than methods of sampling inspection and an inspection on only a part of the end face of the honeycomb structure, has been desperately desired to be developed.

The present invention has been developed in view of the above-mentioned problems, and an object of the present invention is to provide a method for inspecting honeycomb structure that can simply inspect the cell deformation defect at the end face of the honeycomb structure.

To solve the above-mentioned problems, according to the present invention, the following method for inspecting honeycomb structure is provided.
[1] A method for inspecting honeycomb structure that sets a honeycomb structure having a partition wall as an inspection target, the partition wall defining a plurality of cells, the cells penetrating from a first end face to a second end face, comprising a process A of measuring for at least one cell among the plurality of cells open to the first end face of the honeycomb structure the size of an inscribed circle internally in contact with the partition wall defining said cell, wherein the at least one cell where the size of the inscribed circle internally in contact with the partition wall is measured is set as one measurement cell and the cells where the size of the inscribed circle internally in contact with the partition wall is not measured are set as non-measurement cells, wherein for each measurement cell at least one cell among the cells adjacent to the one measurement cell and separated therefrom by the partition wall is a non-measurement cell where the size of the inscribed circle is not measured, and for each non-measurement cell at least one cell among the cells adjacent to the one non-measurement cell and separated therefrom by the partition wall is a measurement cell where the size of the inscribed circle is measured.
[2] The method for inspecting honeycomb structure according to [1], further comprising a process B of taking an image of the first end face of the honeycomb structure with an imaging means, wherein the size of the inscribed circle is measured in the image taken by the process B.
[3] The method for inspecting honeycomb structure according to [1] or [2], wherein in the process A, cells one-third or less of a total number of the cells are set as the measurement cells.
[4] The method for inspecting honeycomb structure according to [3], wherein in the process A, cells one-fifth of the total number of the cells are set as the measurement cells.
[5] The method for inspecting honeycomb structure according to any one of [1] to [4] wherein the cell formed at an outermost circumference of the first end face of the honeycomb structure is deselected from a target for measuring the size of the inscribed circle.
[6] The method for inspecting honeycomb structure according to [5] wherein the cells up to two pieces counted from the outermost circumference of the first end face of the honeycomb structure are deselected from the target for measuring the size of the inscribed circle.
[7] The method for inspecting honeycomb structure according to any one of [1] to [6] further comprising a process C of measuring a size of an inscribed circle internally in contact with the partition wall of the second end face of the honeycomb structure, the partition wall defining predetermined measurement cells.
[8] The method for inspecting honeycomb structure according to any one of [1] to [7], wherein the honeycomb structure where the cell open to the first end face has a polygonal shape with three or more apexes is set as an inspection target.
[9] The method for inspecting honeycomb structure according to [8], wherein the honeycomb structure where the cell open to the first end face has a quadrangular shape or a hexagon shape is set as an inspection target.

A method for inspecting honeycomb structure of the present invention inspects cell deformation defect of a honeycomb structure by measuring a size of an inscribed circle of a "measurement cell." The inscribed circle is internally in contact with a partition wall that defines these measurement cells. The "measurement cell" is a specific cell open to a first end face of the honeycomb structure. In the method for inspecting honeycomb structure according to the present invention, the cell deformation defect of the honeycomb structure can be easily inspected. In particular, in the method for inspecting honeycomb structure according to the present invention, even if all cells open to the end face of the honeycomb structure are not set as the target "measurement cell" where the size of the inscribed circle is to be measured, the all cells at the first end face of the honeycomb structure can be substantially inspected for cell deformation defect. Accordingly, inspection time required for inspection for the cell deformation defect can be shortened. To obtain an inspection result of the cell deformation defect, even if a processing unit performs various arithmetic operations, an amount of arithmetic operation is reduced. Accordingly, even without using the processing unit with high arithmetic processing capability, the inspection result can be relatively quickly obtained.

### BRIEF DESCRIPTION OF THE DRAWINGS

Fig. 1 is a perspective view schematically showing a honeycomb structure of an inspection target of a method for inspecting honeycomb structure of the present invention;
Fig. 2 is a plan view schematically showing a first end face of the honeycomb structure shown in Fig. 1;
Fig. 3 is a cross-sectional view schematically showing a cross section taken along the line A-A' of Fig. 2;
Fig. 4 is an enlarged plan view where a range indicated by a dashed line B in Fig. 2 is enlarged;
Fig. 5A is an explanatory drawing showing an exemplary procedure for measuring an inscribed circle in a process A;
Fig. 5B is an explanatory drawing showing the exemplary procedure for measuring the inscribed circle in the process A;
Fig. 5C is an explanatory drawing showing the exemplary procedure for measuring the inscribed circle in the process A;
Fig. 5D is an explanatory drawing showing the exemplary procedure for measuring the inscribed circle in the process A;
Fig. 6 is a perspective view schematically showing an exemplary inspection apparatus used for one embodiment of the method for inspecting honeycomb structure of the present invention;
Fig. 7 is an explanatory drawing showing another exemplary procedure for measuring the inscribed circle in the process A; and
Fig. 8 is an explanatory drawing showing yet another exemplary procedure for measuring the inscribed circle in the process A.

### DESCRIPTION OF THE PREFERRED EMBODIMENTS

Next, a mode for carrying out the present invention will be described in detail with reference to the drawings. It should be understood that the present invention is not limited to the following embodiments.

### (1) Method for Inspecting Honeycomb Structure:

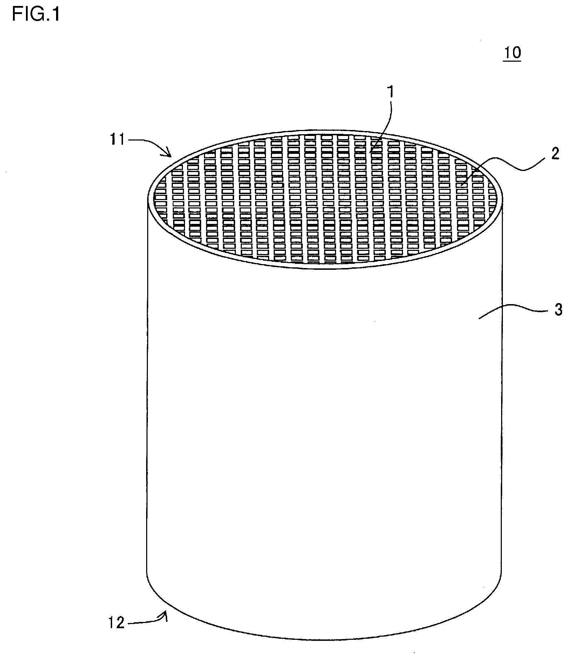

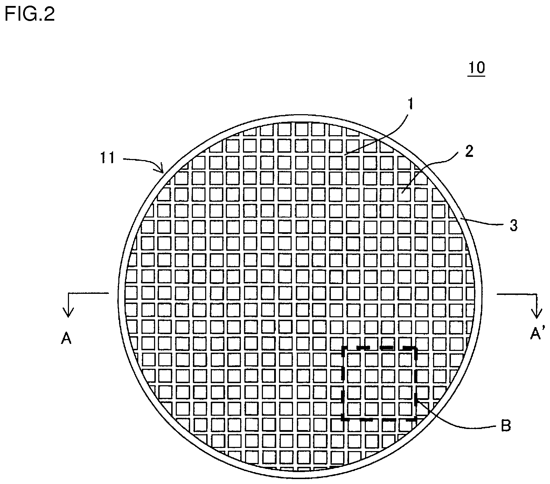

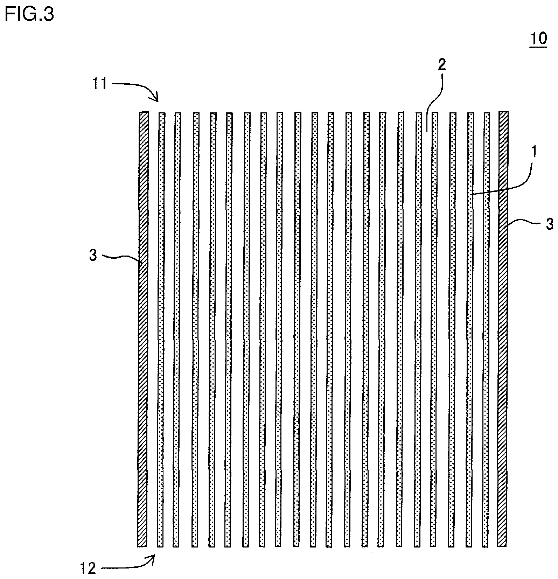

One embodiment of the method for inspecting honeycomb structure of the present invention is an inspection method that inspects a honeycomb structure 10 with a partition wall 1 as shown in Fig. 1 to Fig. 3. The partition wall defines a plurality of cells 2. The plurality of cells 2 penetrate from a first end face 11 to a second end face 12. The honeycomb structure 10 shown in Fig. 1 to Fig. 3 has the partition wall 1 and a circumferential wall 3. The partition wall 1 defines the cells 2. The circumferential wall 3 is disposed at an outermost circumference. The honeycomb structure 10 is preferable to be a ceramic honeycomb structure. Further, the honeycomb structure 10 is more preferable to have the porous, ceramic partition wall 1. Here, Fig. 1 is a perspective view schematically showing the honeycomb structure of the inspection target of the method for inspecting honeycomb structure of the present invention. Fig. 2 is a plan view schematically showing the first end face of the honeycomb structure shown in Fig. 1. Fig. 3 is a cross-sectional view schematically showing a cross section taken along the line A-A' of Fig. 2.

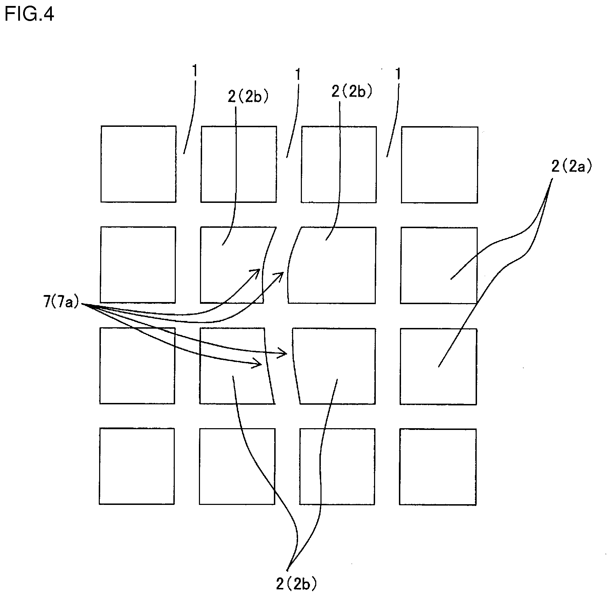

The method for inspecting honeycomb structure of this embodiment is an inspection method to inspect presence/absence of a cell deformation 7 as shown in Fig. 4. The cell deformation 7 occurs in the cell 2 open to the end face (for example, the first end face in Fig. 4) of the honeycomb structure 10 when the partition wall 1 of the honeycomb structure 10 is distorted. Hereinafter, the "cell deformation 7" formed at the cell 2 may be referred to as a "cell deformation defect 7a." The cells indicated by reference numeral 2a in Fig. 4 are cells 2a where the cell deformation defect 7a is absent. Meanwhile, the cells indicated by reference numeral 2b in Fig. 4 are cells 2b where the cell deformation defects 7a are present. Fig. 4 is an enlarged plan where a range indicated by a dashed line B in Fig. 2 is enlarged.

The method for inspecting honeycomb structure of this embodiment is an inspection method that includes a process A. The process A measures a size of an inscribed circle internally in contact with the partition wall, which defines these cells. The size of the inscribed circle in at least one cell among the plurality of cells open to the first end face of the honeycomb structure is measured. That is, the process A measures the size of the inscribed circle internally in contact with the partition wall 1, which defines these cells 2. The size of the inscribed circle in the cell 2 open to the first end face 11 of the honeycomb structure 10 as shown in Fig. 1 and Fig. 2 is measured. Thus, the process A inspects the cell deformation defect of the honeycomb structure 10. This process A does not measure the size of the inscribed circles of the all cells 2 open to the first end face 11 of the honeycomb structure 10, but measures a size of an inscribed circle of a predetermined cell. Then, the respective measured sizes of the inscribed circles are compared with a predetermined base value. Thus, the honeycomb structure 10 is inspected for cell deformation defect. The method for inspecting honeycomb structure of this embodiment selects the cell where the size of the inscribed circle is to be measured so as to meet the following conditions. The method then measures the size of the inscribed circle of the selected predetermined cell. The conditions in the process A are as follows. First, the cell where the size of the inscribed circle internally in contact with the partition wall is measured is referred to as a "measurement cell", and a cell where the size of the inscribed circle internally in contact with the partition wall is not to be measured is referred to as a "non-measurement cell." As a first condition (condition 1), at least one cell among the cells adjacent to one measurement cell separated by the partition wall is set as the non-measurement cell where the size of the inscribed circle is not to be measured. As a second condition (condition 2), at least one cell among the cells adjacent to one non-measurement cell separated by the partition wall is set as the measurement cell where the size of the inscribed circle is to be measured. The method for inspecting honeycomb structure of this embodiment is characterized by selecting the measurement cell or the non-measurement cell so as to meet these condition 1 and condition 2, and performing the inspection for cell deformation defect. The following further describes the inspection method in detail.

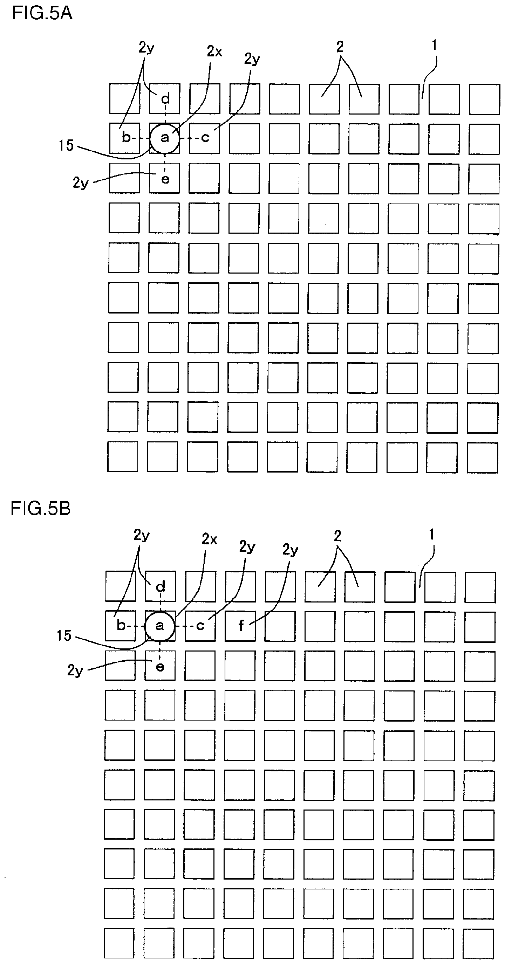

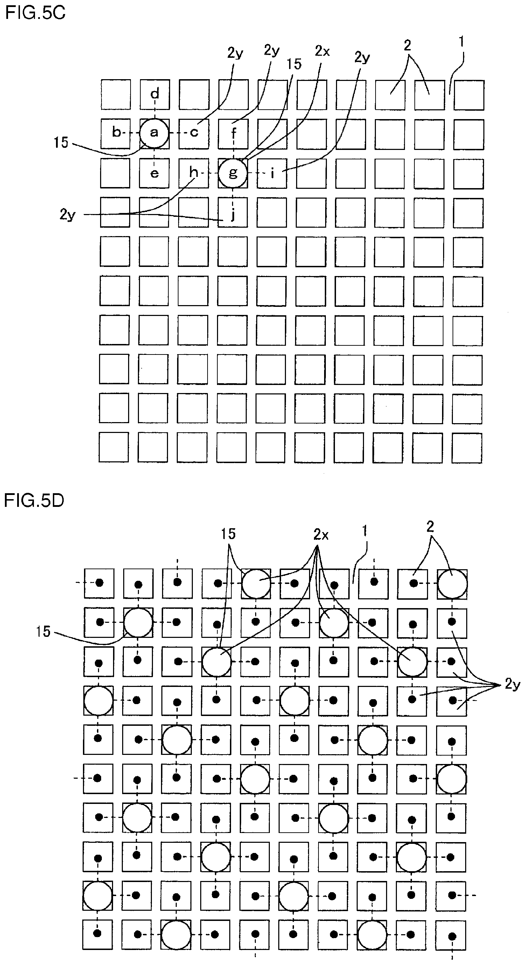

Here, Fig. 5A, Fig. 5B, Fig. 5C, and Fig. 5D are explanatory drawings, which show an exemplary procedure for measuring the inscribed circle in the process A. Fig. 5A, Fig. 5B, Fig. 5C, and Fig. 5D are enlarged plan views where a part of the first end face of the honeycomb structure is enlarged. In the exemplary procedures for measuring the inscribed circle described here, measurement cells 2x and non-measurement cells 2y are sequentially selected in the order of Fig. 5B, Fig. 5C, and Fig. 5D from the state shown in Fig. 5A. The size of the inscribed circle 15 of the measurement cell 2x is measured. Hereinafter, when referring to the "inscribed circle of the measurement cell 2x", this means the inscribed circle 15 internally in contact with the partition wall 1, which defines the measurement cells 2x. Fig. 5A, Fig. 5B, Fig. 5C, and Fig. 5D show an example where the shape of the cell 2 open to the first end face of the honeycomb structure is a quadrangular shape.

In the process A, at least one cell 2 among the cells 2 adjacent to the measurement cell 2x separated by the partition wall 1 is set as a non-measurement cell 2y. Moreover, at least one cell 2 among the cells 2 adjacent to the non-measurement cell 2y separated by the partition wall 1 is set as the measurement cell 2x. For example, as shown in Fig. 5A, assume the case where the cell indicated by reference numeral "a" is the measurement cell 2x. Then, at least one cell 2 among the four cells 2 adjacent to the measurement cell 2x separated by the partition wall 1 is set as the non-measurement cell 2y. Hereinafter, a cell adjacent to a predetermined cell separated by the partition wall may be simply referred to as an "adjacent cell." In Fig. 5A, with respect to the measurement cell 2x, which is indicated by reference numeral "a", all the four adjacent cells 2 indicated by reference numerals "b", "c", "d" and "e" are the non-measurement cells 2y. Next, as shown in Fig. 5B, assume the case where the cell (cell indicated by reference numeral "f") right next to the non-measurement cell 2y, which is indicated by reference numeral "c", on the paper is set as the non-measurement cell 2y. Then, at least the one cell 2 among the four cells 2 adjacent to the non-measurement cell 2y, which is indicated by reference numeral "f", becomes the measurement cell 2x. The procedure described here, as shown in Fig. 5C, sets the cell (cell indicated by reference numeral "g") lower next to the non-measurement cell 2y, which is indicated by reference numeral "f", on the paper is set as the measurement cell 2x. Hereinafter, also regarding other cells such as the measurement cell 2x, which is indicated by reference numeral "g", or the like, the measurement cell 2x or the non-measurement cell 2y is selected by the method similar to the procedure described above such that the cells 2 adjacent to these other cells meet the above-described condition 1 and condition 2. In Fig. 5C, the remaining three cells (cells indicated by reference numerals "h", "i" and "j") among the cells adjacent to the measurement cell 2x, which is indicated by reference numeral "g", are set as the non-measurement cells 2y.

Following the procedure described above, the measurement cell 2x and the non-measurement cell 2y are selected. The size of the inscribed circle 15 of the measurement cell 2x is measured. For example, in the example shown in Fig. 5D, the size of the inscribed circle 15 of only the specific measurement cell 2x is measured. This constitution allows omitting measurement of the size of the inscribed circle 15 of the non-measurement cell 2y. This ensures simplifying a sequence of the operations of measuring the size of the inscribed circles 15. In Fig. 5D, the cells 2 in which a small black circle is drawn are the non-measurement cells 2y. In Fig. 5D, the cells 2 in which the inscribed circle 15 is drawn are the measurement cells 2x. Note that the inscribed circle 15 drawn in the measurement cell 2x is an imaginary line drawn when measuring the size of the inscribed circle 15. The inscribed circle 15 is not directly drawn to the first end face 11 of the honeycomb structure 10 shown in Fig. 1 and Fig. 2. For example, an imaging means takes an image of the first end face 11 of the honeycomb structure 10. The imaginary inscribed circle 15 (see Fig. 5D) is drawn to the obtained image. Thus, the size of this inscribed circle 15 (see Fig. 5D) can be measured. Here, the "inscribed circle" means a circle inside of a polygonal cell. The polygonal cells are defined by the partition wall. The inscribed circle is the largest circle (in other words, the circle with the largest diameter) internally in contact with this polygonal shape.

The example shown in Fig. 5D sets all the four cells 2 adjacent to the one measurement cell 2x as the non-measurement cells 2y. Further, one cell among the four cells 2 adjacent to the non-measurement cell 2y is set as the measurement cell 2x. Thus, the measurement cell 2x and the non-measurement cell 2y are selected. By thus selecting the measurement cell 2x and the non-measurement cell 2y, even if the all cells 2 are not the measurement cells 2x, the cell deformation defect can be substantially inspected on the all cells 2 open to the first end face 11 of the honeycomb structure 10. That is, in the case where a cell deformation defect occurs in one cell arranged at the first end face of the honeycomb structure, the inventor has focused on a fact that another cell adjacent to this cell and sharing the partition wall with this cell is also affected by the cell deformation defect. Thus, the present invention has been completed. In the method for inspecting honeycomb structure of this embodiment, if the cell deformation defect occurs in one cell, at least one cell among this one cell and the cells adjacent to this one cell becomes the measurement cell where the size of the inscribed circle is to be measured. Then, the measured size of the inscribed circle is compared with a predetermined criterion. This allows inspecting the presence/absence of cell deformation defect of the measurement cell and the cells adjacent to this measurement cell. The procedure for selecting the measurement cell and the non-measurement cell described above allows effectively preventing a situation where the non-measurement cells continuously exist and a place where the cell deformation defect is not inspected exists. Providing the non-measurement cell allows shorting inspection time required for the inspection for cell deformation defect. To obtain an inspection result of the cell deformation defect, even if a processing unit performs various arithmetic operations, an amount of arithmetic operation is reduced. Accordingly, even without using the processing unit with high arithmetic processing capability, the inspection result can be relatively quickly obtained.

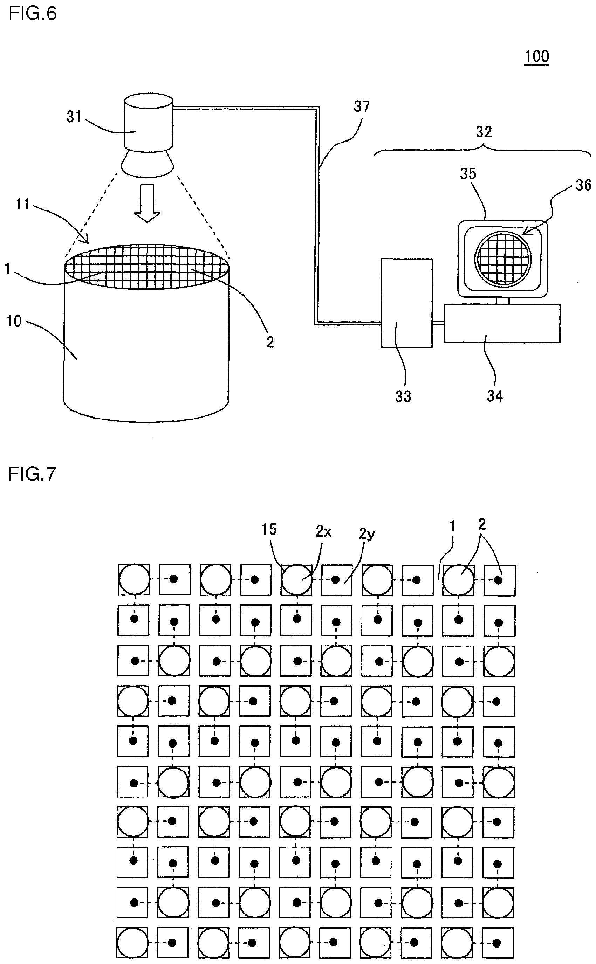

The method for inspecting honeycomb structure of this embodiment is preferable to further include a process B of taking an image of the first end face of the honeycomb structure by an imaging means. The size of the inscribed circle is preferable to be measured in the image taken by the process B. As this process B, for example, an inspection apparatus 100 as shown in Fig. 6 can be used. Here, Fig. 6 is a perspective view schematically showing an exemplary inspection apparatus used for one embodiment of the method for inspecting honeycomb structure of the present invention. The inspection apparatus 100 shown in Fig. 6 includes an imaging means 31 and an image analysis means 32. It is preferred that the image analysis means 32 include an analysis means 34. The analysis means 34 measures the size of the inscribed circle internally in contact with the partition wall 1 (for example, see Fig. 5D), which defines the cells 2 (for example, see Fig. 5D) in an image taken by the imaging means 31. The image analysis means 32 may include a display means 35. The display means 35 can display an image 36, which is taken by the imaging means 31. Further, the image analysis means 32 may include storage means 33. The storage means 33 stores the image 36, which is taken by the imaging means 31, as data. Reference numeral 37 in Fig. 6 denotes a wiring for transmitting data from the imaging means 31 to the image analysis means 32. As the imaging means 31 and the image analysis means 32, for example, an image analyzer such as "NEXIV, VMR-1515" (product name) manufactured by Nikon Corporation can be used. Using such image analyzer, it is preferred to measure the size of the inscribed circle internally in contact with the partition wall, which defines these cells, regarding at least one cell among the plurality of cells open to the first end face of the honeycomb structure.

In Fig. 5A to Fig. 5D, the measurement cell 2x and the non-measurement cell 2y are selected such that the four cells 2 adjacent to the one measurement cell 2x become the non-measurement cells 2y. Then, the size of the inscribed circles 15 is measured. However, with the method for inspecting honeycomb structure of this embodiment, it is only necessary to measure the size of the inscribed circle 15 of the measurement cell 2x so as to meet the above-described condition 1 and condition 2. For example, Fig. 7 shows an example where all the four cells 2 adjacent to this measurement cell 2x become the non-measurement cells 2y with respect to the one measurement cell 2x. Fig. 7 shows an example where one or three cells among the four cells adjacent to the non-measurement cell 2y is the measurement cell 2x with respect to this one non-measurement cell 2y. Fig. 7 shows an example where the cells corresponding to one-third pieces with respect to the total number of cells become the measurement cells 2x. The size of the inscribed circle 15 may be measured by selecting the measurement cell 2x and the non-measurement cell 2y as shown in Fig. 7. Here, Fig. 7 is an explanatory drawing showing another exemplary procedure for measuring the inscribed circle in the process A. In Fig. 7, for example, the two cells 2 right next to and lower next to the one measurement cell 2x on the paper are set as the non-measurement cells 2y. Setting these three cells as one set, this set is repeatedly disposed at the end face of the honeycomb structure.

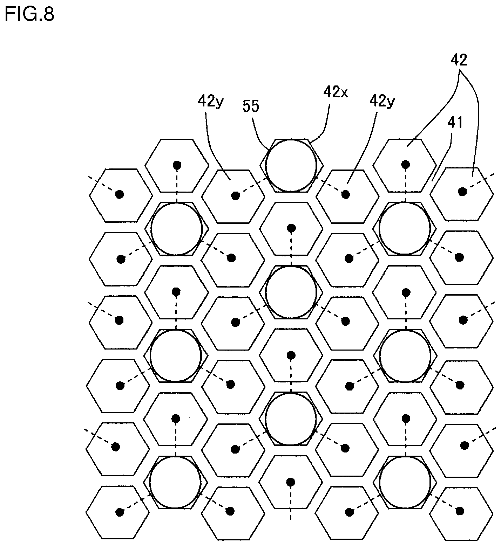

The above-described inspection method describes an example where the cell 2 has a quadrangular shape. However, the shape of the cell 2 is not limited to the quadrangular shape. That is, the method for inspecting honeycomb structure of this embodiment can inspect a honeycomb structure with cells open to the first end face having a polygonal shape with three or more apexes. In the method for inspecting honeycomb structure of the embodiment, the cells open to the first end face are preferable to have a quadrangular shape or a hexagon shape. Hereinafter, "the shape of cell open to the first end face" may be simply described as a "shape of cell." For example, in the case where the shape of cell is the hexagon, as shown in Fig. 8, a measurement cell 42x and a non-measurement cell 42y may be selected and the size of an inscribed circle 55 may be measured. In Fig. 8, with respect to the one measurement cell 42x, six cells 42 adjacent to this measurement cell 42x separated by a partition wall 41 is set as non-measurement cells 42y. With respect to the one non-measurement cell 42y, two cells 42 among the six cells 42 adjacent to these non-measurement cells 42y become the measurement cells 42x. The remaining four cells 42 become the non-measurement cells 42y. Here, Fig. 8 is an explanatory drawing showing yet another exemplary procedure for measuring the inscribed circle in the process A.

In the process A, setting one-third or less pieces of cells with respect to the total number of cells as the measurement cells is preferable. In the process A, setting one-fifth pieces of the total number of cells as the measurement cells is more preferable. Even the case where the number of measurement cells are reduced with respect to the total number of cells, the above-described condition 1 and condition 2 for the process A need to be met. This constitution allows ensuring inspection accuracy to the same extent as the case where the cell deformation defect is inspected on all cells at the first end face of the honeycomb structure while reducing the number of measurement cells. Accordingly, the method for inspecting honeycomb structure of this embodiment allows effectively reducing the inspection time required for inspection for cell deformation defect.

In the method for inspecting honeycomb structure of this embodiment, among the cells formed at an outermost circumference of the first end face of the honeycomb structure, cells whose shapes are partially lost due to a circumferential wall of the honeycomb structure are preferable to be removed from the inspection target. Here, "removed from the inspection target" means that these cells are removed from a target for measuring the size of the inscribed circle. When measuring the size of the inscribed circle of the above-described "cells whose shapes are partially lost due to a circumferential wall", the size of the measured inscribed circle differs from the size of the inscribed circle measured in the cell with normal shape. In view of this, for example, if the "cells whose shapes are partially lost due to a circumferential wall" is included in the inspection targets, these cells may be misapprehended that the cell deformation defect occurs. Removing "cells whose shapes are partially lost due to a circumferential wall" from the inspection targets allows inspecting cell deformation defect more accurately. With the method for inspecting honeycomb structure of this embodiment, it is more preferred that the cells formed at the outermost circumference of the first end face of the honeycomb structure be removed from the target for measuring the size of the inscribed circle. The cells up to two pieces counted from the outermost circumference of the first end face of the honeycomb structure may be removed from the target for measuring the size of the inscribed circle. Thus, the predetermined number of cells counted from the outermost circumference is removed from the target for measuring the size of the inscribed circle. This allows inspection for cell deformation defect accurately and more simplified.

The method for inspecting honeycomb structure of this embodiment may further include a process C. The process C measures the size of the inscribed circle internally in contact with the partition wall of the second end face of the honeycomb structure. The partition wall defines predetermined measurement cells. The process A, which is described above, inspects the cell deformation defect of the cells open to this first end face regarding the first end face of the honeycomb structure. As the process C, the cell deformation defect may also be inspected on the cells open to the second end face regarding this second end face of the honeycomb structure. This process C measures the size of the inscribed circle of the cell at the second end face of the honeycomb structure. Except for this, the size of the inscribed circle of the cell can be measured by the method similar to the process A, which is described above.

Next, the following describes a method for detecting the presence/absence of cell deformation defect from the size of the inscribed circle measured by the method for inspecting honeycomb structure of this embodiment. A predetermined standard (specifications) regarding the size of the cells open to the first end face is determined for the honeycomb structure of inspection target. In view of this, usually, the cells with the size corresponding to the standard are formed so as to be sequentially arranged at the first end face of the honeycomb structure. Accordingly, in the honeycomb structure with no cell deformation defect, the size of all cells falls within the predetermined range. In the method for inspecting honeycomb structure of this embodiment, considering the above-described standard (specifications) regarding the size of the cells, it is preferred that the range of the size of inscribed circle to be imaginally drawn in the cell be set. For example, assume the case where the standard on the size of cell is the quadrangular cell with a length of 1 mm at one side. Then, the inscribed circle with a diameter of 1 mm is drawn in the cell meeting this standard. In the above-described standard, a tolerance of the allowable cell size or a similar specification is determined. Following this tolerance, an allowable value for the size of the inscribed circle can be set. This allowable value of the size of the inscribed circle becomes a criterion for passing/failing inspection for cell deformation defect. When the size of the inscribed circle measured in the process A falls within the allowable value, this is regarded as passed. If the size of the inscribed circle is out of the allowable value, this is regarded as failed. As one example, assume the case where the standard on the size of cell open to the first end face of the honeycomb structure is a cell that has a quadrangular shape of 1 mm at one side. The allowable value of the size of the inscribed circle can be set to, for example, 1 mm ± 0.10 mm. The cell whose size of the inscribed circle is out of the allowable value can be determined as the cell where the cell deformation defect occurs. Thus, the size of the inscribed circle is compared with the criterion for passing/failing. This allows inspection for the presence/absence of cell deformation defect, the number of cells and a position of the cell where the cell deformation defect occurs, a level of the cell deformation defect (in other words, the size shifted from the allowable value), or a similar status.

In the method for inspecting honeycomb structure of this embodiment, the criterion for passing/failing the inspection may include the number of cells where the size of the inscribed circle is out of the allowable value. For example, a ratio of the number of cells where the size of the inscribed circle is out of the allowable value to the total number of cells where the inscribed circle is measured is obtained. If this ratio exceeds the predetermined base value, this can be regarded as failed. Thus, regarding the criterion for passing/failing the inspection for cell deformation defect, based on the standard (specifications) required for the honeycomb structure of inspection target, an optimum base value can be set appropriately. For example, the allowable values for size may be set plurally at the inscribed circle. The base value may be set to the ratio of the number of cells out of the respective allowable values. Further, as the criteria for passing/failing the inspection, the criteria such as the following (1) and (2) can be set.
(1) In a central portion (for example, an approximately one-quarter range of an area ratio of an outer shape of the end face and a similar figure of the end face) of this end face of the honeycomb structure, which is a product, a ratio of the number of cells out of the allowable value for the size of the inscribed circle of cell is set as the criterion for passing/failing this inspection.
(2) In a range other than the central portion in (1), a ratio of the number of cells out of the allowable value for the size of the inscribed circle of cell is set as the criterion for passing/failing this inspection.

### Examples

Hereinafter, the present invention will further specifically be described with examples, but the present invention is not limited to these examples.

### (Example 1)

Example 1 inspected cell deformation defect using the honeycomb structure 10 as shown in Fig. 1 to Fig. 3 as an inspection target. The honeycomb structure 10 has the porous partition wall 1 and the circumferential wall 3. The partition wall defines the plurality of cells 2. The plurality of cells 2 penetrate from the first end face 11 to the second end face 12 of the honeycomb structure 10. The circumferential wall 3 is disposed at the outermost circumference of the honeycomb structure 10.

A ceramic honeycomb structure was used as the inspection target. Specifically, as the honeycomb structure, the honeycomb structure made of cordierite was employed. The honeycomb structure was formed as follows. Kneaded material was prepared by adding dispersing medium, binder, an inorganic binder, and pore former to a cordierite raw material. The kneaded material was extruded, and a honeycomb formed body was formed. The obtained honeycomb formed body was sintered and the honeycomb structure is produced. The cordierite raw material is a ceramic raw material where materials are combined meeting a chemical composition within a range of silica: 42 to 56 mass %, alumina: 30 to 45 mass %, and magnesia: 12 to 16 mass %.

The honeycomb structure had the cells with a quadrangular shape. A thickness of the partition wall of the honeycomb structure was 0.09 mm. A cell pitch of the honeycomb structure was 1.27 mm. The shape of the honeycomb structure was columnar. The first end face of the honeycomb structure had a circular shape at a diameter of 103 mm. A length of the honeycomb structure was 100 mm. The length of the honeycomb structure means a length from the first end face to the second end face of the honeycomb structure. An area of the first end face of the honeycomb structure was 8332 mm². The honeycomb structure of the inspection target used in Example 1 is hereinafter referred to as an "inspection target 1." Table 1 shows the "Shape of cell", "Thickness of partition wall", "Cell pitch", "Shape of first end face", "Diameter of first end face", "Length of honeycomb structure", and "Area of first end face."

**[Table 1]**

| | Inspection target 1 | Inspection target 2 |
|---|---|---|
| Shape of cell | Quadrangular shape | Hexagon shape |
| Thickness of partition wall | 0.09 mm | 0.09 mm |
| Cell pitch | 1.27 mm | 1.11 mm |
| Shape of first end face | Circle | Circle |
| Diameter of first end face | 103 mm | 103 mm |
| Length of honeycomb structure | 100 mm | 100 mm |
| Area of first end face | 8332 mm² | 8332 mm² |

Example 1 first took an image of the first end face of the honeycomb structure of the inspection target 1 with an image analyzer (product name, "NEXIV, VMR-1515" manufactured by Nikon Corporation). As the image analyzer, the image analyzer whose accuracy had been confirmed in advance was used. Next, in the obtained image, the measurement cell where the size of the inscribed circle is measured and the non-measurement cell where the size of the inscribed circle is not to be measured were selected. In Example 1, four cells adjacent to one measurement cell separated by the partition wall were set as the non-measurement cells. Accordingly, the number of cells (hereinafter also referred to as "the number of measurement cells") where the size of the inscribed circle is to be measured becomes one-fifth of the total number of cells. When selecting the measurement cell and the non-measurement cell, one cell among cells adjacent to one non-measurement cell was always set as the measurement cell. In Example 1, a cell partially surrounded by a circumferential wall among a plurality of cells is removed from the inspection targets. Next, with the image taken by the image analyzer, the size of the inscribed circle drawn in the measurement cell was measured. In Example 1, in the case where the measured size of the inscribed circle was less than 1.00 mm or more than 1.40 mm, a cell in which the inscribed circle at the size of less than 1.00 mm and more than 1.40 mm was drawn was determined as the cell deformation defect. In Example 1, a result that the cell deformation defect occurred in 3.42% cells with respect to the measurement cells was obtained.

In Example 1, compared with an inspection method for Comparative Example 2, which will be described later, time required for the process to inspect the presence/absence of cell deformation defect from the measured size of the inscribed circle was able to be shortened by 80%. The inspection method for Comparative Example 2 includes a process of measuring the inscribed circles of all cells open to the first end face for inspecting the presence/absence of cell deformation defect. Example 1 inspects the presence/absence of cell deformation defect without contacting the cells. Accordingly, the honeycomb structure of the inspection target was able to be inspected without damage such as chipping. After inspecting the cell deformation defect, the presence/absence of chipping of the cells open to the first end face of the honeycomb structure was inspected by a visual check. Then, the chipping was not found on the all cells.

Table 2 shows the "Inspection target", "Number of measurement cells", "Measuring time", "Ratio of detecting cell deformation defect", and "Number of chipping" in Example 1. The "Inspection target" columns in Table 2 indicate which honeycomb structure was actually inspected among the "honeycomb structure of the inspection target 1" and the "honeycomb structure of the inspection target 2" shown in Table 1 in the corresponding Examples and comparative examples. The "Number of measurement cells" column in Table 2 indicates a ratio of the number of cells where the inscribed circle was measured to the total number of cells open to the first end face of the honeycomb structure.

The "Measuring time" column of Table 2 indicates time required for measuring the presence/absence of cell deformation defect in the corresponding examples and comparative examples using the "time required for measuring the inscribed circle" in the inspection method to be compared as the base. Examples 1 to 3 and Comparative Example 1 use the "time required for measuring the inscribed circle" in the inspection method for Comparative Example 2 as the base. Examples 4 to 6 and Comparative Example 3 use the "time required for measuring the inscribed circle" in the inspection method for Comparative Example 4 as the base. In the "Measuring time" column in Table 2, assume the case where the "time required for measuring the inscribed circle" in the inspection method (for example, the inspection method for Comparative Example 2) that becomes the base is 100%. Then, "-80.0%" indicates that the measurement was able to be performed at -80.0% hours (namely, 20.0% hours). In the "Measuring time" column in Table 2, assume the case where the "time required for measuring the inscribed circle" in the inspection method (for example, the inspection method for Comparative Example 2) that becomes the base is 100%. Then, "60 times or more" indicates that 60 times or more of the measuring time as the base was required for the measurement.

The "Number of chipping" columns in Table 2 indicates inspection results of the presence/absence of chipping performed after the inspection for cell deformation defect. The number of cells indicated by the "Number of chipping" column is the number of cells where the chipping is found.

**[Table 2]**

| | Inspection target | Number of measurement cells | Measuring time | Ratio of detecting cell deformation defect | Number of chipping |
|---|---|---|---|---|---|
| Example 1 | Inspection target 1 | One-fifth cells | -80.0% | 3.42% | 0 cells |
| Example 2 | Inspection target 1 | One-fifth cells | -80.0% | 3.42% | 0 cells |
| Example 3 | Inspection target 1 | One-fifth cells | -80.0% | 3.42% | 0 cells |
| Comparative example 1 | Inspection target 1 | Cell extracted by person | 60 times or more | 1.47% | 2 cells |
| Comparative example 2 | Inspection target 1 | All cells | Base | 3.40% | 0 cells |
| Example 4 | Inspection target 2 | One-seventh cells | -85.7% | 3.01% | 0 cells |
| Example 5 | Inspection target 2 | One-seventh cells | -85.7% | 3.10% | 0 cells |
| Example 6 | Inspection target 2 | One-seventh cells | -85.7% | 3.19% | 0 cells |
| Comparative example 3 | Inspection target 2 | Cell extracted by person | 60 times or more | 1.09% | 3 cells |
| Comparative example 4 | Inspection target 2 | All cells | Base | 3.06% | 0 cells |

### (Examples 2 and 3)

Examples 2 and 3 set cells other than the cells set as the measurement cells in Example 1 as the measurement cells. Thus, the cell deformation defect was inspected. That is, Examples 2 and 3 set any of cells among the cells set as the non-measurement cells in Example 1 as the measurement cells. Then, regarding the "Number of measurement cells", similar to Example 1, the measurement cell and the non-measurement cell were selected so as to be one-fifth of the total number of cells. Regarding the method for measuring the size of the inscribed circle, and measurement of the presence/absence of the cell deformation defect, the method similar to Example 1 was used. Table 2 shows the "Inspection target", "Number of measurement cells", "Measuring time", "Ratio of detecting cell deformation defect", and "Number of chipping" in Examples 2 and 3.

### (Comparative Example 1)

Comparative Example 1 inspected the cell deformation defect with a pin gage. Specifically, first, a person (inspector) observes the honeycomb structure in a production line. The honeycomb structure whose cell is deformed and below the criterion is determined by visual check. Such honeycomb structure (in other words, the honeycomb structure with the cell deformation defect spotted by the inspector) is extracted. The pin gage is pressed to the first end face of this honeycomb structure. Thus, the inspection for cell deformation defect was performed. In Comparative Example 1, the inspection for cell deformation defect on all cells open to the first end face is performed with the above-described pin gage. The inspection target in Comparative Example 1 was set as the "Inspection Target 1" similar to Example 1. In the "Number of measurement cells" column in Table 2, Comparative Example 1 is described as a "Cell extracted by person."

### (Comparative Example 2)

In Comparative Example 2, the size of the inscribed circle of all cells open to the first end face of the honeycomb structure is measured to inspect the cell deformation defect. That is, Comparative Example 2 set the all cells open to the first end face of the honeycomb structure as the measurement cells where the size of the inscribed circle is measured. Accordingly, the non-measurement cell where the size of the inscribed circle is not to be measured is not provided. Regarding the method for measuring the size of the inscribed circle, and the method for measuring the presence/absence of the cell deformation defect, the method similar to Example 1 was used. Table 2 shows the "Inspection target", "Number of measurement cells", "Measuring time", "Ratio of detecting cell deformation defect", and "Number of chipping" in Comparative Example 2. "Measuring time" of Comparative Example 2 is a base to Examples 1 to 3 and Comparative Example 1. "Measuring time" of Comparative Example 2 in Table 2 is described as "Base", which means base measuring time.

### (Examples 4 to 6)

In Examples 4 to 6, the cell deformation defect was inspected using the honeycomb structure of "Inspection target 2" shown in Table 1 as the inspection target. The honeycomb structure of "Inspection target 2" has cells with a hexagonal shape. In Examples 4 to 6, six cells adjacent to one measurement cell separated by the partition wall were set as the measurement cells. Accordingly, the number of cells where the size of the inscribed circle is to be measured is one-seventh of the total number of cells. The measurement cell and non-measurement cell were selected such that one cell among cells adjacent to one non-measurement cell was always the measurement cell. In this way, the measurement cell and the non-measurement cell were selected from the hexagonal-shaped cells of the honeycomb structure. By the method similar to Example 1, an image of the first end face of the honeycomb structure of the inspection target 2 was taken with the image analyzer. Next, with the image taken by the image analyzer, the size of the inscribed circle drawn in the measurement cell was measured by the method similar to Example 1. In Examples 4 to 6, in the case where the measured size of the inscribed circle was less than 0.90 mm, the cell in which the inscribed circle at the size of less than 0.90 mm was drawn was determined as the cell deformation defect. In Examples 4 to 6, the measurement cells at different positions among Examples 4 to 6 were selected. Thus, the cell deformation defect was inspected. Table 1 shows the "Shape of cell", "Thickness of partition wall", "Cell pitch", "Shape of first end face", "Diameter of first end face", "Length of honeycomb structure", and "Area of first end face" in the honeycomb structure of the inspection target 2. Table 2 shows the "Inspection target", "Number of measurement cells", "Measuring time", "Ratio of detecting cell deformation defect", and "Number of chipping" in Examples 4 to 6.

### (Comparative Example 3)

In Comparative Example 3, the cell deformation defect was inspected using the honeycomb structure of "Inspection target 2" shown in Table 1 as the inspection target. In Comparative Example 3, the cell deformation defect was inspected with the pin gage similar to Comparative Example 1. Table 2 shows the "Inspection target", "Number of measurement cells", "Measuring time", "Ratio of detecting cell deformation defect", and "Number of chipping" in Comparative Example 3. In the "Number of measurement cells" column of Table 2, Comparative Example 3 is described as a "Cell extracted by person."

### (Comparative Example 4)

In Comparative Example 4, the size of the inscribed circle of all cells open to the first end face of the honeycomb structure was measured to inspect the cell deformation defect. That is, in Comparative Example 4, all cells open to the first end face of the honeycomb structure were set as the measurement cells where the size of the inscribed circle was measured. Accordingly, the non-measurement cell where the size of the inscribed circle was not measured was not provided. Regarding the method for measuring the size of the inscribed circle, and the method of measuring the presence/absence of the cell deformation defect, the method similar to Example 4 was used. Table 2 shows the "Inspection target", "Number of measurement cells", "Measuring time", "Ratio of detecting cell deformation defect", and "Number of chippings" in Comparative Example 4. "Measuring time" in Comparative Example 2 is a base to Examples 4 to 6 and Comparative Example 3. "Measuring time" of Comparative Example 2 in Table 2 is described as "Base", which means base measuring time.

### (Results)

As shown in Table 2, the inspection method of Examples 1 to 3 was able to reduce the measuring time to -80.0% compared with the inspection method of Comparative Example 2. That is, the inspection method of Examples 1 to 3 reduced the measuring time to one-fifth compared with the inspection method of Comparative Example 2. Meanwhile, "Ratio of detecting cell deformation defect" in the inspection method of Examples 1 to 3 was a similar value to "Ratio of detecting cell deformation defect" in the inspection method of Comparative Example 2 where all cells were inspected. That is, the inspection method of Examples 1 to 3 was able to inspect the cell deformation defect accurately while reducing the measuring time. The inspection method of Examples 1 to 3 was compared while changing the positions of the measurement cells. It was confirmed that an error due to specification of the measurement cell hardly occurred when selecting the measurement cell and non-measurement cell meeting the following conditions. The conditions for selecting the measurement cell are as follows. At least one cell among cells adjacent to one measurement cell is set as the non-measurement cell. Then, at least one cell among cells adjacent to one non-measurement cell is set as the measurement cell. The inspection method using the pin gage like Comparative Example 1 required great amount of time as the measuring time and accuracy of the inspection was low. Additionally, with the inspection method using the pin gage like Comparative Example 1, the following was proved. The pin gage was in contact with the partition wall during measurement. This possibility invites a defect of chipping.

As shown in Table 2, the inspection method of Examples 3 to 6 was able to perform accurate inspection for cell deformation defect also on the honeycomb structure where the shape of cells was hexagon while reducing the measuring time.

The method for inspecting honeycomb structure of the present invention is preferably applicable to an inspection for cell deformation defect of a ceramic honeycomb structure.

### Description of Reference Numerals

1, 41: partition wall, 2, 42: cell, 2a: cell (cell without cell deformation defect), 2b: cell (cell with cell deformation defect), 2x, 42x: measurement cell, 2y, 42y: non-measurement cell, 3: circumferential wall, 7: cell deformation, 7a: cell deformation defect, 10: honeycomb structure, 11: first end face, 12: second end face, 15, 55: inscribed circle, 31: imaging means, 32: image analysis means, 33: storage means, 34: analysis means, 35: display means, 36: image, 37: wiring, 100: inspection apparatus

## Claims

1. A method for inspecting honeycomb structure (10) that sets a honeycomb structure (10) having a partition wall (1, 41) as an inspection target, the partition wall (1, 41) defining a plurality of cells (2, 42), the cells (2, 42) penetrating from a first end face (11) to a second end face (12), comprising
a process A of measuring for at least one cell (2, 42) among the plurality of cells (2, 42) open to the first end face (11) of the honeycomb structure (10) the size of an inscribed circle (15, 55) internally in contact with the partition wall (1, 41) defining said cell (2, 42), wherein
the at least one cell (2, 42) where the size of the inscribed circle (15, 55) internally in contact with the partition wall (1, 41) is measured is set as one measurement cell (2x, 42x) and the cells (2, 42) where the size of the inscribed circle (15, 55) internally in contact with the partition wall (1, 41) is not measured are set as non-measurement cells (2y, 42y), wherein for each measurement cell at least one cell (2, 42) among the cells (2, 42) adjacent to the one measurement cell (2x, 42x) and separated therefrom by the partition wall (1, 41) is a non-measurement cell (2y, 42y) where the size of the inscribed circle (15, 55) is not measured, and for each non-measurement cell at least one cell (2, 42) among the cells (2, 42) adjacent to the one non-measurement cell (2y, 42y) and separated therefrom by the partition wall (1, 41) is a measurement cell (2x, 42x) where the size of the inscribed circle (15, 55) is measured.

2. The method for inspecting honeycomb structure according to claim 1, further comprising
a process B of taking an image (36) of the first end face (11) of the honeycomb structure (10) with an imaging means (31), wherein
the size of the inscribed circle (15, 55) is measured in the image (36) taken by the process B.

3. The method for inspecting honeycomb structure (10) according to claim 1 or 2, wherein
in the process A, cells (2, 42) one-third or less of a total number of the cells (2, 42) are set as the measurement cells (2x, 42x).

4. The method for inspecting honeycomb structure (10) according to claim 3, wherein
in the process A, cells (2, 42) one-fifth of the total number of the cells (2, 42) are set as the measurement cells (2x, 42x).

5. The method for inspecting honeycomb structure (10) according to any one of claims 1 to 4, wherein
the cell (2, 42) formed at an outermost circumference of the first end face (11) of the honeycomb structure (10) is deselected from a target for measuring the size of the inscribed circle (15, 55).

6. The method for inspecting honeycomb structure (10) according to claim 5, wherein
the cells (2, 42) up to two pieces counted from the outermost circumference of the first end face (11) of the honeycomb structure (10) are deselected from the target for measuring the size of the inscribed circle (15, 55).

7. The method for inspecting honeycomb structure (10) according to any one of claims 1 to 6, further comprising
a process C of measuring a size of an inscribed circle (15, 55) internally in contact with the partition wall (1, 41) of the second end face (12) of the honeycomb structure (10), the partition wall (1, 41) defining predetermined measurement cells (2x, 42x).

8. The method for inspecting honeycomb structure (10) according to any one of claims 1 to 7, wherein
the honeycomb structure (10) where the cell (2, 42) open to the first end face (11) has a polygonal shape with three or more apexes is set as an inspection target.

9. The method for inspecting honeycomb structure (10) according to claim 8, wherein
the honeycomb structure (10) where the cell (2, 42) open to the first end face (11) has a quadrangular shape or a hexagon shape is set as an inspection target.

## Patentansprüche

1. Verfahren zur Prüfung einer Wabenstruktur (10), das eine Wabenstruktur (10) mit einer Trennwand (1, 41) als Prüfzielbereich festlegt, wobei die Trennwand (1, 41) eine Vielzahl von Zellen (2, 42) definiert, die Zellen (2, 42) von einer ersten Endfläche (11) zu einer zweiten Endfläche (12) hindurchverlaufen, wobei das Verfahren Folgendes umfasst:
einen Prozess A des Messens der Größe eines eingeschriebenen Kreises (15, 55), der innen die Trennwand (1, 41) berührt , die die Zelle (2, 42) definiert, für zumindest eine Zelle (2, 42) aus der Vielzahl von Zellen (2, 42), die an der ersten Endfläche (11) der Wabenstruktur (10) offen ist, wobei
die zumindest eine Zelle (2, 42), in der die Größe des eingeschriebenen Kreises (15, 55), der innen die Trennwand (1, 41) berührt, gemessen wird, als eine Messzelle (2x, 42x) festgelegt wird und die Zellen (2, 42), in der die Größe des eingeschriebenen Kreises (15, 55), der innen die Trennwand (1, 41) berührt, nicht gemessen wird, als Nicht-Messzellen (2y, 42y) festgelegt werden, wobei für jede Messzelle zumindest eine Zelle (2, 42) von den Zellen (2, 42), die benachbart in Bezug auf die eine Messzelle (2x, 42x) vorliegen und durch die Trennwand (1, 41) von dieser getrennt sind, eine Nicht-Messzelle (2y, 42y) ist, in der die Größe des eingeschriebenen Kreises (15, 55) nicht gemessen wird, und für jede Nicht-Messzelle zumindest eine Zelle (2, 42) von den Zellen (2, 42), die benachbart auf die eine Nicht-Messzelle (2y, 42y) vorliegen und von dieser durch die Trennwand (1, 41) getrennt sind, eine Messzelle (2x, 42x) ist, in der die Größe des eingeschriebenen Kreises (15, 55) gemessen wird.

2. Verfahren zur Prüfung einer Wabenstruktur nach Anspruch 1, wobei das Verfahren ferner Folgendes umfasst:
einen Prozess B des Aufnehmens eines Bildes (36) der ersten Endfläche (11) der Wabenstruktur (10) mit einem Bildgebungsmittel (31), wobei
die Größe des eingeschriebenen Kreises (15, 55) in dem in Prozess B aufgenommenen Bild (36) gemessen wird.

3. Verfahren zur Prüfung einer Wabenstruktur (10) nach Anspruch 1 oder 2, wobei
in Prozess A Zellen (2, 42), die einem Drittel oder weniger der Gesamtanzahl von Zellen (2, 42) entsprechen, als Messzellen (2x, 42x) festgelegt sind.

4. Verfahren zur Prüfung einer Wabenstruktur (10) nach Anspruch 3, wobei
in Prozess A Zellen (2, 42), die einem Fünftel oder weniger der Gesamtanzahl von Zellen (2, 42) entsprechen, als Messzellen (2x, 42x) festgelegt sind.

5. Verfahren zur Prüfung einer Wabenstruktur (10) nach einem der Ansprüche 1 bis 4, wobei
die Zelle (2, 42), die am äußersten Umfang der ersten Endfläche (11) der Wabenstruktur (10) ausgebildet ist, aus einem Zielbereich zur Messung der Größe des eingeschriebenen Kreises (15, 55) abgewählt wird.

6. Verfahren zur Prüfung einer Wabenstruktur (10) nach Anspruch 5, wobei bis zu zwei Zellen (2, 42) gezählt vom äußersten Umfang der ersten Endfläche (11) der Wabenstruktur (10) aus dem Zielbereich zur Messung der Größe des eingeschriebenen Kreises (15, 55) abgewählt werden.

7. Verfahren zur Prüfung einer Wabenstruktur (10) nach einem der Ansprüche 1 bis 6, das ferner Folgendes umfasst:
einen Prozess C zum Messen einer Größe eines eingeschriebenen Kreises (15, 55), der die Trennwand (1, 41) der zweiten Endfläche (12) der Wabenstruktur (10) innen berührt, wobei die Trennwand (1, 41) vorbestimmte Messzellen (2x, 42x) definiert.

8. Verfahren zur Prüfung einer Wabenstruktur (10) nach einem der Ansprüche 1 bis 7, wobei
die Wabenstruktur (10), in der die Zelle (2, 42), die in Richtung der ersten Endfläche (11) offen ist, eine polygonale Form mit drei oder mehr Spitzen aufweist, als Prüfzielbereich festgelegt ist.

9. Verfahren zur Prüfung einer Wabenstruktur (10) nach Anspruch 8, wobei
die Wabenstruktur (10), in der die Zelle (2, 42), die in Richtung der ersten Endfläche (11) offen ist, eine rechteckige oder sechseckige Form aufweist, als Prüfzielbereich festgelegt ist.

## Revendications

1. Procédé d'inspection d'une structure en nid d'abeille (10) qui définit une structure en nid d'abeille (10) ayant une paroi de séparation (1, 41) comme cible d'inspection, la paroi de séparation (1, 41) définissant une pluralité de cellules (2, 42), les cellules (2, 42) pénétrant depuis une première face d'extrémité (11) dans une seconde face d'extrémité (12), comprenant
un processus A de mesure d'au moins une cellule (2, 42) parmi la pluralité de cellules (2, 42) ouvertes vers la première face d'extrémité (11) de la structure en nid d'abeille (10), la taille d'un cercle inscrit (15, 55) en contact interne avec la paroi de séparation (1, 41) définissant ladite cellule (2, 42), dans lequel
la au moins une cellule (2, 42), où la taille du cercle inscrit (15, 55) en contact interne avec la paroi de séparation (1, 41) est mesurée, est définie comme une cellule de mesure (2x, 42x) et les cellules (2, 42), où la taille du cercle inscrit (15, 55) en contact interne avec la paroi de séparation (1, 41) n'est pas mesurée, sont définies comme cellules de non-mesure (2y, 42y), dans lequel, pour chaque cellule de mesure au moins une cellule (2, 42) parmi les cellules (2, 42) adjacente à la cellule de mesure (2x, 42x) et séparée de celle-ci par la paroi de séparation (1, 41) est une cellule de non-mesure (2y, 42y) où la taille du cercle inscrit (15, 55) n'est pas mesurée, et pour chaque cellule de non-mesure, au moins une cellule (2, 42) parmi les cellules (2, 42) adjacente à la cellule de non-mesure (2y, 42y) et séparée de celle-ci par la paroi de séparation (1, 41) est une cellule de mesure (2x, 42x) où la taille du cercle inscrit (15, 55) est mesurée.

2. Procédé d'inspection de structure en nid d'abeille selon la revendication 1, comprenant en outre
un processus B consistant à prendre une image (36) de la première face d'extrémité (11) de la structure en nid d'abeille (10) à l'aide des moyens d'imagerie (31), dans lequel
la taille du cercle inscrit (15, 55) est mesurée dans l'image (36) prise par le processus B.

3. Procédé d'inspection de la structure en nid d'abeille (10) selon la revendication 1 ou 2, dans lequel
dans le processus A, un tiers ou moins de cellules (2, 42) d'un nombre total des cellules (2, 42) est établi en tant que les cellules de mesure (2x, 42x).

4. Procédé d'inspection de structure en nid d'abeilles (10) selon la revendication 3, dans lequel
dans le processus A, un cinquième de cellules (2, 42) du nombre total des cellules (2, 42) est établi en tant que les cellules de mesure (2x, 42x).

5. Procédé d'inspection d'une structure en nid d'abeilles (10) selon l'une quelconque des revendications 1 à 4, dans lequel
la cellule (2, 42) formée à une circonférence la plus extérieure de la première face d'extrémité (11) de la structure en nid d'abeille (10) est désélectionnée d'une cible pour mesurer la taille du cercle inscrit (15, 55).

6. Procédé d'inspection de la structure en nid d'abeilles (10) selon la revendication 5, dans lequel
les cellules (2, 42) jusqu'à deux pièces comptées à partir de la circonférence la plus extérieure de la première face d'extrémité (11) de la structure en nid d'abeille (10) sont désélectionnées de la cible pour mesurer la taille du cercle inscrit (15, 55).

7. Procédé d'inspection d'une structure en nid d'abeille (10) selon l'une quelconque des revendications 1 à 6, comprenant en outre
un processus C de mesure d'une taille d'un cercle inscrit (15, 55) en contact interne avec la paroi de séparation (1, 41) de la seconde face d'extrémité (12) de la structure en nid d'abeille (10), la paroi de séparation (1, 41) définissant des cellules de mesure prédéterminées (2x, 42x).

8. Procédé d'inspection d'une structure en nid d'abeille (10) selon l'une quelconque des revendications 1 à 7, dans lequel
la structure en nid d'abeille (10) où la cellule (2, 42) ouverte vers la première face d'extrémité (11) a une forme polygonale avec trois ou plus de trois sommets, est définie en tant que cible d'inspection.

9. Procédé d'inspection de la structure en nid d'abeille (10) selon la revendication 8, dans lequel
la structure en nid d'abeille (10) où la cellule (2, 42) ouverte vers la première face d'extrémité (11) a une forme quadrangulaire ou une forme hexagonale, est définie en tant que cible d'inspection.
